(19) Europäisches Patentamt European Patent Office Office européen des brevets

(11) **EP 1 791 306 B1**

(12) **FASCICULE DE BREVET EUROPEEN**

(45) Date de publication et mention de la délivrance du brevet:
**13.08.2008 Bulletin 2008/33**

(51) Int Cl.:
***H04L 12/56*** *(2006.01)*

(21) Numéro de dépôt: **06124523.9**

(22) Date de dépôt: **22.11.2006**

(54) **Système de commutation de paquets pour noeud de réseau de télécommunication**

Paketvermittlungssystem für Telekommunikationsknoten

Packetswitch for a telecommunication node

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **24.11.2005 FR 0553581**

(43) Date de publication de la demande:
**30.05.2007 Bulletin 2007/22**

(73) Titulaire: **Alcatel Lucent**
**75008 Paris (FR)**

(72) Inventeurs:
• **Post, Georg**
**91620, LA VILLE DU BOIS (FR)**
• **Noirie, Ludovic**
**91620, NOZAY (FR)**
• **Cucchi, Silvio**
**20083, GAGGIANO (MILANO) (IT)**
• **Valente, Fabio**
**36045, LONIGO (VICENZA) (IT)**

(74) Mandataire: **Thibaud, Jean-Baptiste**
**Alcatel Lucent**
**Intellectual Property & Standards**
**54 rue La Boétie**
**75008 Paris (FR)**

(56) Documents cités:
EP-A- 1 193 922 US-A1- 2001 043 606
US-A1- 2005 135 350

**Description**

L'invention se situe dans le domaine des réseaux de télécommunication et concerne les systèmes de commutation utilisés dans les noeuds de réseau.

L'invention concerne plus particulièrement les systèmes de commutation aptes à traiter des données organisées en paquets (commutation de paquets). Elle concerne aussi les systèmes de commutation dits "multiservice", c'est-à-dire capables d'effectuer des commutations de paquets, mais aussi de traiter des données organisées selon d'autres formats de transmission (commutation de circuits), typiquement les données organisées en multiplex temporels (dits "TDM") tels que ceux conformes aux protocoles SDH ou SONET, ou encore ODU ("Optical Data Unit").

Le terme "paquet" désigne ici tout ensemble de données qui regroupe selon un format préétabli des données d'information à transmettre (appelées "charge utile", ou "payload" en anglais) et des données auxiliaires contenues par exemple dans une en-tête du paquet ("header" en anglais). L'en-tête contient en particulier une indication de la destination du paquet et généralement une classe de qualité de service. L'indication peut être une adresse de destination explicite ou un "label" représentatif de cette destination. Parmi les formats de paquets les plus courants, on peut citer les paquets IP (Internet Protocol), MPLS ou Ethernet qui sont de taille variable, et les cellules ATM qui sont de taille fixe.

Il est rappelé qu'un réseau comporte une pluralité de noeuds reliés entre eux par des liaisons de transmission. Un noeud est souvent relié à plusieurs autres noeuds et intègre alors des fonctions de routage pour aiguiller sélectivement les données portées par des signaux reçus de liaisons amont vers d'autres liaisons aval en fonction des destinations respectives des données. Certains noeuds ont des fonctions d'accès permettant l'introduction de données dans le réseau et/ou l'extraction de données à partir du réseau.

Pour réaliser une fonction de routage, un noeud est équipé d'un système de commutation ou plus simplement "commutateur" ("switch" en anglais). Un système de commutation comporte d'une part plusieurs ports d'entrée reliés par des liaisons amont à des émetteurs de stations d'utilisateurs ou d'autres noeuds, et d'autre part plusieurs ports de sortie reliés par des liaisons aval à des récepteurs d'autres stations d'utilisateurs ou d'autres noeuds. D'une façon générale, le système de commutation a pour fonction d'aiguiller les flux de données reçues par ses divers ports d'entrée, sélectivement en fonction de leurs destinations respectives, vers des ports de sortie affectés à ces destinations.

Un rôle essentiel d'un système de commutation est la gestion des conflits, c'est-à-dire le contrôle permanent de l'aiguillage des données de sorte que plusieurs données reçues destinées à un même port de sortie soient dirigées vers ce port à des instants différents. La performance d'un système est évaluée par sa bande passante, c'est-à-dire le débit total de données binaires qu'il peut en moyenne aiguiller sans pertes de données.

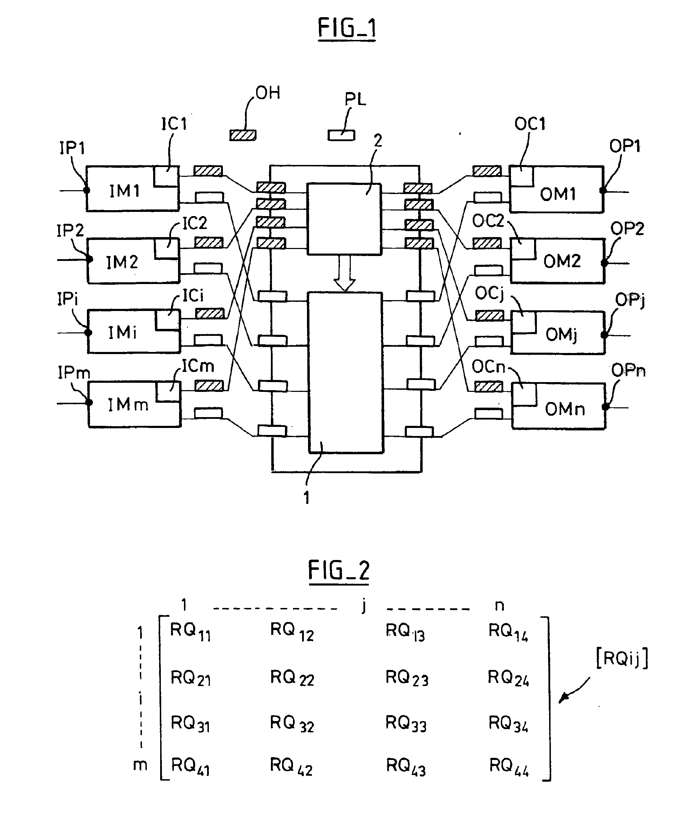

La figure 1 représente schématiquement une structure typique d'un système de commutation. Ce système comporte une matrice de commutation 1 pilotée par un contrôleur central 2, une pluralité de modules d'entrée IM1, IM2, IMi, IMm pilotés respectivement par des contrôleurs d'entrée IC1, IC2, ICi, ICm et une pluralité de modules de sortie OM1, OM2, OMj, OMn pilotés respectivement par des contrôleurs de sortie OC1, OC2, OCi, OCn. Les modules d'entrée sont reliés respectivement à des liaisons amont par des ports d'entrée IP1, IP2, IPi, IPm, et les modules de sortie sont reliés respectivement à des liaisons aval par des ports de sortie OP1, OP2, OPj, OPn. Chaque port d'entrée IPi ou de sortie OPj peut "agréger" une pluralité de canaux physiques ou logiques de transmission de paquets. Les modules d'entrée et de sortie coopèrent d'autre part avec le contrôleur central 2 qui rassemblent les fonctions centrales de commande du système. Les nombres m et n de modules d'entrée et de sortie sont souvent égaux, mais ils pourraient être différents, selon le type et la partie de réseau concernés.

Les données à commuter reçues par les ports d'entrée IPi sont transmises à la matrice par les modules d'entrée IMi, et en fonction de commandes reçues du contrôleur central 2, la matrice effectue un aiguillage sélectif de ces données vers les ports de sortie OPj par l'intermédiaire des modules de sortie OMj. Chaque module d'entrée IMi ou de sortie OMj communique aussi avec le contrôleur 2 pour échanger des signaux et informations de contrôle utiles au bon déroulement de l'aiguillage sélectif.

Plus précisément, chaque module d'entrée IMi a un rôle d'interface physique avec la liaison amont associée et comporte des moyens de mémorisation et de traitement des données reçues, ces moyens étant conçus pour stocker temporairement ces données, par exemple dans le cas de paquets en formant et gérant des files d'attente de paquets. Si plusieurs classes de qualité de service (ou plus simplement "classes de service") sont prévues dans le réseau, on prévoit plusieurs files d'attente affectées respectivement à ces classes.

Typiquement, chaque module d'entrée est prévu pour constituer plusieurs files d'attente organisées à la fois par ports de sortie destinataires et par classes de qualité de service. Ainsi, chacune de ces files contient les paquets en attente destinés à un port de sortie donné et bénéficiant d'une classe de qualité de service donnée. Si les modules de sortie sont prévus chacun pour gérer plusieurs canaux de sortie partageant le même port de sortie, on prévoira alors une file d'attente pour chaque canal de sortie de chaque port de sortie, pour chaque classe de qualité de service. Les files d'attente ainsi organisées sont parfois appelées "files d'attente de sortie virtuelles" ou VOQ (pour "Virtual Output Queue" en anglais).

La gestion des files d'attente consiste d'une part à remplir ces files en permanence avec les nouvelles données reçues, et d'autre part à extraire de ces files les données autorisées à être transférées vers la matrice.

Les transferts de données entre les modules d'entrée IMi et la matrice de commutation 1 d'une part, et les transferts entre la matrice et les modules de sortie OMj d'autre part vont normalement s'effectuer par cycles de commutation successifs de durée constante T, désignée dans la suite par "durée de transfert". Avantageusement, le commutateur sera en outre conçu pour qu'à chaque cycle de commutation chaque module d'entrée et de sortie puisse respectivement émettre et recevoir plusieurs paquets à la fois. Un module d'entrée sera par exemple prévu pour constituer et envoyer à chaque cycle un bloc de données comportant un ensemble de paquets, chaque bloc, de taille fixée, comportant plusieurs groupes de paquets associés respectivement aux différents modules de sortie, chaque groupe comprenant des paquets destinés à un même module de sortie associé à ce groupe. La taille d'un groupe est de préférence modifiable. Le cas échéant, il sera aussi subdivisé en sous-groupes associés respectivement à plusieurs canaux et/ou plusieurs classes de service. Un commutateur de ce type est décrit plus en détail dans la demande de brevet européen EP 1549103, publiée le 29 juin 2005, correspondant à la demande américaine publiée US 2005/0135350.

Pour que la matrice puisse réaliser la commutation des données ainsi transférées, le contrôleur central doit en particulier connaître vers quels ports de sortie respectifs ces données transférées doivent être aiguillées par la matrice. Ces informations d'aiguillage sont obtenues à partir des destinations contenues dans les en-têtes des paquets et en fonction d'informations de routage chargées au préalable dans une table de routage. Les modules d'entrée sont chargés d'élaborer ces informations d'aiguillage et de les transmettre au contrôleur central en complément aux paquets associés transférés vers la matrice. Le contrôleur prend alors en compte les informations d'aiguillage associées aux paquets de façon à pouvoir les aiguiller en conséquence.

Ces données de contrôle sont habituellement désignées par le terme anglais "overhead", aussi appelé "sur-débit" et s'ajoutent aux données d'information "utiles" dites "charges utiles" à commuter. Cet aspect est représenté sur la figure 1, où la charge utile et le sur-débit sont symbolisés respectivement par des rectangles blancs PL et des rectangles hachurés OH.

Préalablement aux opérations d'aiguillage proprement dites mentionnées ci-dessus, une fonction essentielle d'un système de commutation de paquets est le mécanisme qui permet de sélectionner en cours d'exploitation à quels moments combien de données de quelles files d'attentes sont autorisées à être transférées. Ce rôle est classiquement confié à des moyens dits "d'arbitrage" ("scheduler" ou "arbiter" en anglais) prévus pour effectuer les sélections selon des règles prédéfinies.

Pour identifier les données à sélectionner, les moyens d'arbitrage exécutent un processus d'arbitrage conçu pour optimiser le transfert des données selon des critères choisis. Entre autres critères possibles, on doit satisfaire au moins à ces conditions :

- éviter les conflits, comme déjà indiqué;
- autoriser les modules d'entrée à transférer par cycle des quantités de données compatibles avec les capacités maximales de transfert entre chaque module d'entrée et la matrice d'une part, et entre la matrice et chaque module de sortie d'autre part.

En outre, un bon mécanisme d'arbitrage devra généralement satisfaire aux conditions supplémentaires suivantes :

- effectuer des choix de paquets en attente avec un certaine "équité", c'est-à-dire traiter tous les paquets d'une même classe de service de façon équivalente en terme de délai de transfert moyen évalué sur un horizon temporel aussi court que possible, quels que soient les ports d'entrée et/ou les ports de sortie par lesquels ils transitent, par exemple en tenant compte des ordres d'arrivée des paquets à commuter;
- donner aux paquets à extraire des files d'attente des priorités différenciées, en fonction notamment de leurs classes de service respectives;
- contribuer à optimiser l'utilisation des ressources du commutateur, c'est-à-dire maximiser sa bande passante.

En résumé, le mécanisme d'arbitrage met en oeuvre une fonction d'arbitrage exécutable par cycles d'arbitrage successifs, pour déterminer à chaque cycle et pour chaque file d'attente, et en fonction de requêtes émises par l'ensemble des modules d'entrée, des quantités de données admises pour un transfert, au cour d'un même cycle de commutation ayant la durée de transfert fixée T, depuis le module d'entrée gérant cette file vers la matrice.

Dans le cas où il est prévu plusieurs files d'attente dans chaque modules d'entrée, par exemple une file d'attente par classe de service et/ou par canal, on peut distinguer plusieurs niveaux de granularité concernant les quantités de données. Ceci conduit à donner quelques définitions utiles à la compréhension du contexte de l'invention.

On définit une quantité "détaillée" de paquets relative à un module d'entrée comme une quantité de données constitutives d'un ensemble de paquets reçus par ce module d'entrée, bénéficiant d'un niveau de priorité donné et affectés à un même canal de sortie d'un module de sortie donné. Cette quantité peut être par exemple un nombre d'octets ou de mots binaires ou de cellules ou de paquets si ces derniers sont de taille fixe.

Une "requête" sera représentative d'une telle quantité détaillée de paquets en attente qu'un module d'entrée est prêt à transférer et qui sera désignée par quantité détaillée "requise" de paquets.

Une quantité dite "agrégée" de paquets est d'une façon générale définie comme la somme de plusieurs quantités détaillées relatives à un couple donné de modules d'entrée et de sortie IMi-OMj, pour tous les niveaux de priorité et pour tous les canaux de sortie gérés par le module de sortie OMj du couple.

Une quantité agrégée "requise" de paquets pour un module d'entrée IMi et relative à un couple formé de ce module d'entrée et d'un module de sortie donné OMj est définie comme une quantité agrégée de paquets en attente que ce module d'entrée est prêt à transférer.

Une quantité "détaillée admise" de paquets relative à un module d'entrée donné IMi est définie comme une quantité détaillée de paquets que le contrôleur d'entrée ICi de ce module d'entrée est autorisé à transférer pendant une même durée de transfert T d'un même cycle de commutation.

Une quantité "agrégée admise" de paquets pour un module d'entrée IMi et relative à un couple formé de ce module d'entrée et d'un module de sortie donné OMj est définie comme une quantité agrégée de paquets que le contrôleur d'entrée ICi de ce module d'entrée est autorisé à transférer pendant une même durée de transfert T d'un même cycle de commutation, en concurrence avec d'autres quantités agrégées admises relatives aux autres couples formés de ce module d'entrée et des autres modules de sortie.

Quels que soient le nombre et l'organisation des files d'attente dans les modules d'entrée, on peut distinguer dans le mécanisme général d'arbitrage une fonction d'arbitrage particulière, désignée par "fonction d'arbitrage central", ayant comme rôle spécifique de déterminer à chaque cycle, en fonction des requêtes, les quantités "agrégées admises" qui sont donc des quantités de paquets, au plus égales respectivement aux quantités agrégée requises, dans la limite de quantités maximales de données pouvant être transférées pendant la durée de transfert fixée T entre chaque module d'entrée et la matrice d'une part, et entre la matrice et chaque module de sortie d'autre part.

Ces quantités maximales relatives respectivement à chaque module d'entrée et à chaque module de sortie sont appelées respectivement "capacité d'entrée maximale" et "capacité de sortie maximale".

Le mécanisme général d'arbitrage sera alors composé de cette fonction d'arbitrage central et de fonctions d'arbitrage "détaillées" plus spécialement chargées de prendre en compte des contraintes supplémentaires relatives aux classes de service et aux différents canaux des ports de sortie.

Bien entendu, dans un système ne prévoyant qu'une seule file d'attente par module d'entrée, le mécanisme général d'arbitrage coïnciderait avec la fonction d'arbitrage central.

US 2001/043 606 décrit un système de commutation conforme au préambule de la revendication 1.

L'invention concerne spécifiquement une telle fonction d'arbitrage central et sa mise en oeuvre dans un système de commutation. Dans la suite, seule cette partie sera donc développée. Aussi, seules les quantités agrégées de paquets définies plus haut étant impliquées, le terme "agrégée" sera désormais omis et considéré comme implicite.

Un but de l'invention est de proposer un système de commutation dont la fonction d'arbitrage central est conçue pour à la fois :

- assurer le respect des capacités maximales de transfert entre la matrice et les modules d'entrée et de sortie,
- permettre une bonne équité à l'égard des paquets, quels que soient les modules d'entrée et les modules de sortie par lesquels ils transitent,
- autoriser une mise en oeuvre relativement simple, même pour des commutateurs de forte capacité, et en particulier pour des systèmes de commutation multiservice qui imposent des contraintes rigoureuses de temps de traitement.

Par exemple, un système de commutation à installer actuellement dans les réseaux optiques d'infrastructure ("backbone" en anglais) devra typiquement satisfaire au cahier des charges suivant :

- traiter à la fois les trafics de paquets et de circuits "TDM";
- gérer plusieurs centaines de canaux par port de sortie;
- prendre en compte des milliers de files d'attente dans chaque module d'entrée.

La fonction d'arbitrage central peut être formulée mathématiquement comme la résolution d'un problème matriciel avec contraintes. En effet, l'ensemble des requêtes relatives à tous les couples de modules d'entrée et de sortie IMi, OMj peut être représentée sous la forme d'une matrice de requêtes ayant m lignes et n colonnes, où chaque élément à l'intersection d'une ligne i et d'une colonne j est une quantité requise $RQ_{ij}$ de paquets candidats à un transfert depuis le module d'entrée IMi vers le module sortie OMj. La figure 2 représente une telle matrice [$RQ_{ij}$] dans le cas particulier où m = n = 4.

La fonction d'arbitrage consiste alors à calculer les éléments d'une matrice [$GR_{ij}$] (non représentée) de même dimension où chaque élément à l'intersection d'une ligne i et d'une colonne j est une quantité admise $GR_{ij}$ relative au

couple correspondant de modules d'entrée et de sortie IMi, OMj, les quantités admises devant satisfaire aux conditions mentionnées précédemment.

Pour ce type de calcul, on peut utiliser des méthodes connues, telles que la méthode de Birkhoff. Sa mise en oeuvre consiste alors à utiliser des moyens de traitement classiques, par exemple à base de microprocesseur, programmés pour exécuter un algorithme correspondant.

Du fait que le calcul des quantités admises prend en compte à chaque cycle la totalité des quantités requises, cette solution permet d'obtenir un résultat rigoureux en terme d'équité. Toutefois, pour des commutateurs de forte capacité elle nécessite un temps d'exécution important et/ou oblige à recourir à des moyens de traitement spéciaux très rapides et donc coûteux.

En vue de réaliser des commutateurs de forte capacité, il convient que la mise en oeuvre de la fonction d'arbitrage soit plus simple. Pour cela, il est proposé une architecture particulière permettant un fonctionnement à la fois séquentiel et parallèle mais qui reste tout de même convenable en terme d'équité.

Plus précisément, l'invention a pour objet un système de commutation pour noeud de réseau de télécommunication, comprenant m modules d'entrée et n modules de sortie coopérant chacun avec une matrice de commutation et avec un contrôleur central commandant ladite matrice, ledit système étant apte à aiguiller sélectivement, via la matrice, des paquets de données reçus par lesdits modules d'entrée, en fonction de leurs destinations respectives, vers des modules de sortie destinataires respectifs,

une quantité de paquets relative à un couple de modules d'entrée et de sortie donné étant définie comme une quantité de données constitutives de paquet(s) reçu(s) par ce module d'entrée et destiné au module de sortie de ce couple,

une requête relative à un couple de modules d'entrée et de sortie donné étant représentative d'une quantité dite "requise" définie comme une quantité de paquets en attente dans ce module d'entrée et candidats pour être transférés vers ce module de sortie,

ledit contrôleur central comportant une unité d'arbitrage central pour effectuer une fonction d'arbitrage exécutable par cycles d'arbitrage successifs, chaque cycle déterminant, en fonction desdites requêtes relatives à tous les couples de modules d'entrée et de sortie, des quantités dites "admises" respectives définies comme des quantités de paquets, au plus égales respectivement auxdites quantités requises, dans la limite de quantités maximales de données pouvant être transférées pendant une durée de transfert fixée entre chaque module d'entrée et la matrice d'une part, et entre la matrice et chaque module de sortie d'autre part, ces quantités maximales étant appelées respectivement "capacité d'entrée maximale" et "capacité de sortie maximale",

caractérisé en ce que l'ensemble des couples de modules d'entrée et de sortie pouvant être divisé en N sous-ensembles disjoints tels qu'aucun module d'entrée ni aucun module de sortie n'appartienne à plus d'un couple d'un même sous-ensemble, l'unité d'arbitrage central est apte à déclencher à chaque cycle d'arbitrage p phases successives associées respectivement à p fonctions, et comporte une pluralité d'unités de traitement aptes chacune à exécuter lesdites p fonctions, chaque fonction portant sur au moins trois paramètres appelés "quantité requise résiduelle", "capacité d'entrée" et "capacité de sortie" dont les valeurs sont relatives à un même couple et sont initialisées en début de cycle respectivement par une quantité requise correspondant à une requête, et lesdites capacités d'entrée et de sortie maximales relatives à ce couple,

en ce que chaque phase est formée de N étapes successives associées respectivement auxdits sous-ensembles, chaque étape étant exécutée en parallèle par lesdites unités de traitement pour effectuer pour chaque couple du sous-ensemble associé l'opération suivante :

- calcul d'une valeur de quantité admise dite "partielle" (dGR) en appliquant aux valeurs desdits paramètres la fonction associée à la phase qui comporte cette étape,
- calcul de valeurs réactualisées desdits paramètres en retranchant cette valeur de quantité admise partielle à chacune des valeurs qu'avaient lesdits paramètres au début de l'étape, lesdites valeurs réactualisées servant de valeurs des paramètres pour l'étape suivante,

la somme des valeurs de quantité admise partielle relatives à un même couple et calculées au cours d'un cycle complet constituant la quantité admise relative à ce couple,

et en ce que lesdites p fonctions sont telles que pour des valeurs positives données desdits trois paramètres, la valeur résultante de quantité admise partielle pour une phase donnée est supérieure à la valeur résultante obtenue pour une phase précédente.

Le fait d'organiser le processus d'arbitrage en phases et étapes successives, les étapes étant relatives à des sous-ensembles de couples de modules d'entrée et de sortie tels que définis ci-dessus, autorise l'exécution de chaque étape par plusieurs moyens de traitement fonctionnant en parallèle, indépendamment les uns des autres, ce qui réduit le temps de traitement en comparaison avec la solution classique.

En outre l'architecture étant modulaire, elle présente l'avantage d'être facilement évolutive, c'est-à-dire de permettre sans trop de difficultés d'adapter les éléments du système à des modifications des nombres de ports d'entrée et de sortie, sans augmentation du temps de traitement. Cela est particulièrement appréciable pour réaliser les systèmes de commutation multiservice mentionnés précédemment. En effet, le traitement par une même matrice de données de type TDM impose au système un fonctionnement synchronisé à un rythme imposé, ce qui constitue pour la fonction d'arbitrage une contrainte supplémentaire par rapport aux simples système de commutation de paquets.

Pour assurer une bonne équité quels que soient les types de trafic à supporter, il conviendra que lesdits sous-ensembles définis pour un cycle donné soient différents de ceux définis pour le cycle qui suit. Cette disposition va permettre de traiter chaque module d'entrée et de sortie de la même façon, du moins en moyenne sur plusieurs cycles.

D'autre part, selon les contextes d'utilisation, les fonctions peuvent être imaginées de différentes façons, à condition bien sûr qu'en fin de chaque cycle les quantités admises calculées assurent le respect des capacités d'entrée et de sortie maximales.

Selon un cas particulier de réalisation respectant cette condition, chaque fonction consiste à diviser la plus petite desdites valeurs desdits paramètres respectivement de quantité requise, de capacité d'entrée et de capacité de sortie par un coefficient diviseur ayant une valeur associée à cette fonction, lesdites valeurs de coefficient diviseur respectivement associées aux p phases successives étant décroissantes depuis une valeur initiale jusqu'à une valeur finale égale à 1.

Ainsi, chaque fonction est facile à réaliser car sa mise en oeuvre nécessite essentiellement des comparateurs et un circuit diviseur. Par ailleurs le fait de prendre une valeur finale égale à 1 garantit qu'aucune capacité de transfert ne sera inutilisée.

Avantageusement, chaque valeur du coefficient est une puissance de 2. Ainsi, le circuit diviseur peut consister en un simple registre à décalage.

D'autre part, il existe plusieurs possibilités pour définir les sous-ensembles de couples de modules d'entrée et de sortie. Il convient toutefois que le choix des sous-ensembles permette une répartition de la fonction d'arbitrage parmi les unités de traitement aussi uniforme que possible.

De préférence, on choisira donc des sous-ensembles de couples de modules d'entrée et de sortie composés chacun d'un même nombre M de couples de modules d'entrée et de sortie. L'unité d'arbitrage central pourra alors comprendre aussi M unités de traitement coopérant avec un séquenceur commun destiné à synchroniser et/ou coordonner les fonctionnements respectifs des unités de traitement.

D'autres aspects et avantages de l'invention apparaîtront dans la suite de la description en référence aux figures.

- La figure 1 commentée précédemment représente schématiquement un exemple de système de commutation où l'invention peut être mise en oeuvre.
- La figure 2 commentée précédemment est une représentation matricielle des requêtes.
- La figure 3 montre schématiquement une unité d'arbitrage central selon l'invention.
- La figures 4 représente une première matrice d'indices représentative d'une phase d'un cycle d'arbitrage selon un premier mode de réalisation de l'invention.
- La figures 5 représente une seconde matrice d'indices représentative d'une phase d'un cycle d'arbitrage selon un second mode de réalisation de l'invention.
- La figures 6 est un organigramme pour expliquer le fonctionnement de l'unité d'arbitrage selon l'invention.

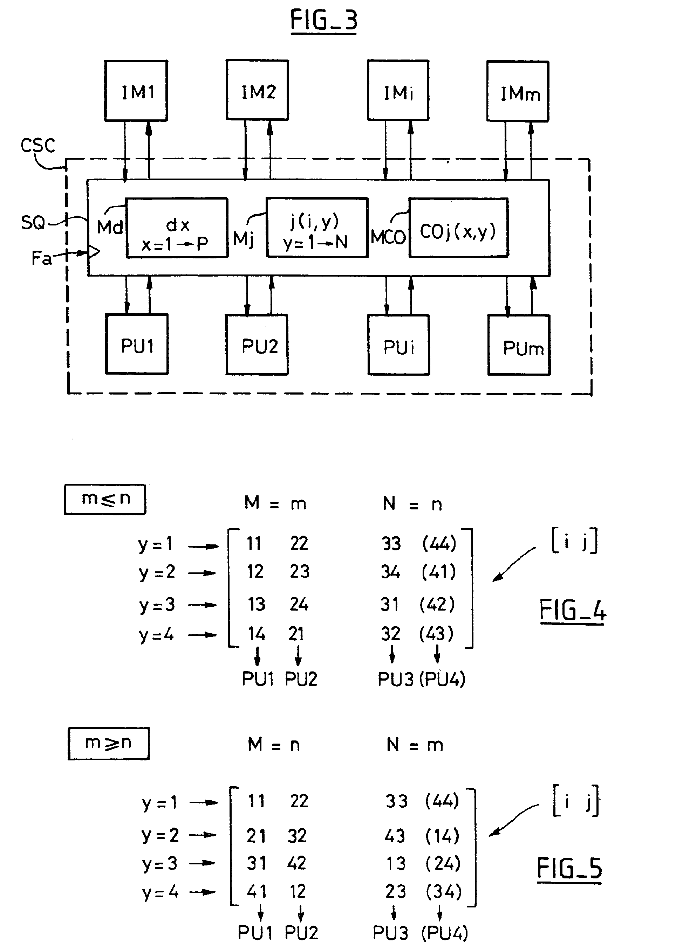

La figure 3 représente schématiquement un exemple de réalisation de l'unité d'arbitrage central CSC, en liaison avec les modules d'entrée IM1, IM2, IMi, IMm.

L'unité d'arbitrage CSC comporte essentiellement un séquenceur SQ coopérant avec des unités de traitement PU1, PU2, PUi, PUm. Selon l'exemple représenté, le nombre d'unités de traitement est égal à celui de modules d'entrée, mais ce n'est pas la seule possibilité, comme cela sera expliqué ultérieurement.

Le séquenceur SQ est conçu pour déclencher des cycles d'arbitrage successifs à un rythme donné. Ce rythme est en principe à fréquence constante $F_a$, mais il pourrait le cas échéant suivre d'autres règles.

A chaque cycle d'arbitrage le séquenceur SQ déclenche p phases successives associées respectivement à p fonctions. Ces p fonctions sont par exemple définies par différentes valeurs $d_x$ d'un coefficient diviseur, où "x" est un nombre entier compris entre 1 et p dont chaque valeur est un indicateur d'une phase correspondante d'un cycle donné.

Selon l'exemple représenté, le séquenceur comporte également des moyens pour déclencher durant chaque phase N étapes successives identifiées chacune par un nombre entier "y" compris entre 1 et N.

A chaque étape, le séquenceur extrait d'une mémoire $M_j$ (ou élabore) les indices j identifiant les modules de sortie à associer aux modules d'entrée d'indices i pour que les différentes unités de traitement effectuent les opérations prévues portant sur les requêtes relatives aux couples de modules d'entrée et de sortie $IM_i$-$OM_j$ identifiés par ces indices. Sur la figure, cette fonction est notée j(i,y), pour "y" compris entre 1 et N.

Le séquenceur comporte aussi une mémoire MCO, mise à jour à chaque étape, et stockant des valeurs de capacités de sortie relatives aux différents modules de sortie. On note $CO_j(x,y)$ la valeur de capacité de sortie du module de sortie $OM_j$ à prendre en compte au début de l'étape y de la phase x. Au début d'un cycle, c'est-à-dire au début de la première étape de la première phase du cycle, la capacité de sortie de chaque module de sortie aura comme valeur sa capacité de sortie maximale. Ensuite, à la fin de chaque étape impliquant ce module de sortie, cette capacité est mise à jour pour prendre une valeur correspondant à une capacité de sortie "résiduelle".

Les unités de traitement PUi comportent chacune des circuits aptes à effectuer les p fonctions correspondant aux p phases successives de chaque cycle d'exécution de l'arbitrage.

Chaque fonction porte au moins sur trois paramètres relatifs à un même couple de modules d'entrée et de sortie : une "quantité requise" RQ, une "capacité d'entrée" CI et une "capacité de sortie" CO, dont les valeurs respectives sont initialisées en début de chaque cycle déclenché par le séquenceur. A chaque étape, la fonction est appliquée à ces paramètres pour fournir une valeur de quantité admise partielle. Les valeurs des paramètres sont alors réactualisées pour l'étape suivante en retranchant cette valeur de quantité admise partielle à chacune des valeurs qu'avaient les trois paramètres au début de l'étape.

La somme grij de toutes les valeurs de quantité admise partielle relatives à un même couple IMi-OMj et calculées au cours d'un même cycle complet constitue alors la quantité admise GRij relative à ce couple. La valeur de cette quantité admise GRij relative à chaque couple est alors transmise à chaque module d'entrée du couple concerné.

Dans un cas particulier de réalisation, le séquenceur SQ commande les unités de traitement pour leur indiquer à chaque phase la fonction à exécuter et à chaque étape le couple de modules d'entrée et de sortie concerné, et les valeurs de capacités d'entrée et de sortie à prendre en compte par cette étape.

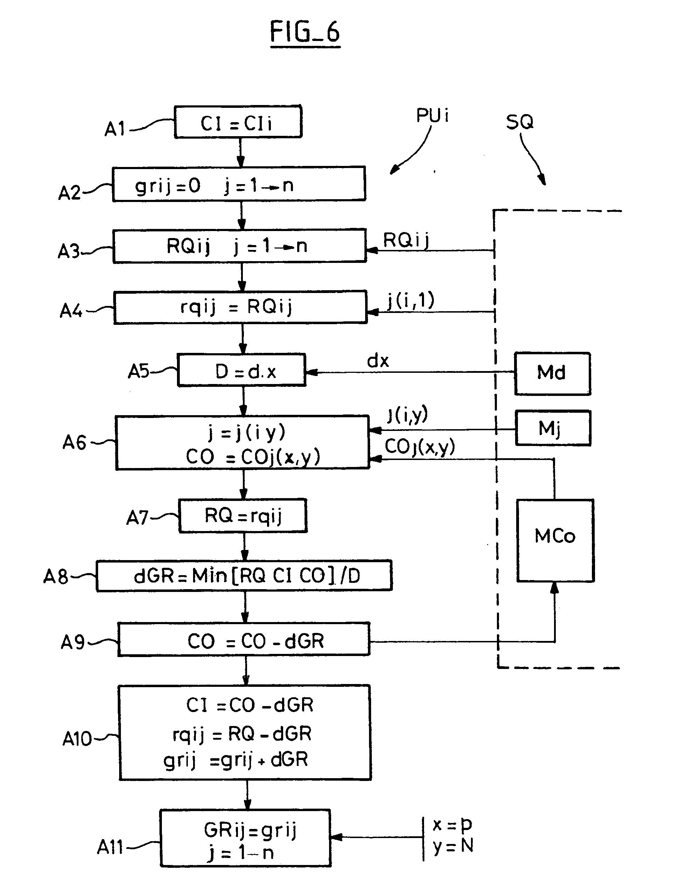

Des explications plus détaillées sur le fonctionnement séquentiel dans ce cas particulier sera donnée ultérieurement en référence à la figure 6.

Auparavant, il est utile d'expliquer diverses possibilités de mise en oeuvre de l'invention. Pour cela, il est commode de reprendre la représentation matricielle introduite par la figure 2. Selon cette représentation les couples d'indices ij de chaque élément RQij de la matrice [RQij] identifient les différents couples de modules d'entrée et de sortie IMi-OMj.

Dans l'exemple représenté, le nombre m de modules d'entrée est égal au nombre n de modules de sortie. On a pris m = n = 4, sachant qu'en réalité le nombre de modules d'entrée ou de sortie sera bien supérieur, par exemple égal à 32 ou davantage. Evidemment, le cas où m serait inférieur à n serait représenté par une matrice rectangulaire ayant plus de colonnes que de lignes, par exemple 4 colonnes et 3 lignes. Inversement, le cas où m serait supérieur à n serait représenté par une matrice rectangulaire ayant plus de lignes que de colonnes, par exemple 4 lignes et 3 colonnes.

Une caractéristique de l'invention consiste à prévoir une division (ou partition) de l'ensemble des couples de modules d'entrée et de sortie IMi-OMj en N sous-ensembles disjoints tels qu'aucun module d'entrée ni aucun module de sortie n'appartienne à plus d'un couple d'un même sous-ensemble. Ceci revient à dire que l'on divise la matrice représentative en N diagonales ou parties de diagonales, à une permutation près des lignes et des colonnes attribuées respectivement aux modules d'entrée et de sortie.

Concernant le choix des nombres de couples de modules d'entrée et de sortie constituant les sous-ensembles, donc des nombres d'éléments des diagonales ou parties de diagonales correspondantes, il convient de faire les observations suivantes.

D'abord, le nombre d'éléments d'une diagonale est au plus égal au plus grand des deux nombres m et n. Ensuite, pour avoir une bonne utilisation des moyens de traitement il est préférable que la fonction d'arbitrage soit répartie uniformément dans le temps et parmi les unités de traitement. Pour cela, il conviendra que chaque sous-ensemble de couples de modules d'entrée et de sortie soit composés d'un même nombre M fixé de couples. Cela se traduit par le fait que la matrice sera divisée en diagonales ou parties de diagonales comportant un même nombre M d'éléments. Il en résulte que le nombre de diagonales ou de parties de diagonales, donc d'étapes de chaque phase est donné par : $N = m.n/M$.

Ce cas est adapté à une réalisation où l'unité d'arbitrage central comprend M unités de traitement, chacune de ces unités exécutant N étapes par phase.

Un cas avantageux est celui où chaque sous-ensemble correspond à une diagonale complète, ce qui correspond à un parallélisme maximum.

Dans ce cas, en vue de limiter les échanges de données entre les unités et le séquenceur, il convient en outre que chaque unité de traitement soit associée en permanence soit à un même module d'entrée IMi, soit à un même module de sortie OMj. En d'autres termes, chaque unité de traitement PUi sera avantageusement dédiée au traitement :

- soit des quantités requises par un même module d'entrée IMi associé et destinées aux n modules de sortie,
- soit des quantités requises par les m modules d'entrée et destinées à un même module de sortie (OMj) associé.

Dans le cas où m et n ne sont pas égaux, on choisira de préférence N égal au plus grand des deux nombres m et n, et M sera alors égal au plus petit des deux nombres m et n, chaque unité de traitement PUi étant dédiée au traitement des quantités requises qui impliquent soit un module d'entrée IMi associé, soit un module de sortie OMj associé selon que m est respectivement inférieur ou supérieur à n.

Cette réalisation a la propriété de procurer un parallélisme maximum avec un nombre minimum d'unités de traitement.

Un premier exemple suivant ces règles est illustré à la figure 4 au moyen d'une matrice d'indices [ij] relative à une phase. Chaque colonne de la matrice comporte la séquence, étape par étape, des indices ij des requêtes selon la matrice [RQij] de la figure 2 et qui sont traitées par une même unité de traitement PUi associée à un même module d'entrée IMi. Chaque ligne représente alors les indices ij des requêtes traitées en parallèle par les unités de traitement PU1-PU4 au cours d'une même étape. Ainsi, les lignes successives composant la matrice d'indices [ij] désignent les indices des ensembles de requêtes correspondantes de la matrice [RQij] qui sont traitées lors des étapes successives y = 1 à 4 de chaque phase d'un même cycle.

Au cas où m serait inférieur à n, la matrice d'indices n'aurait que m colonnes pour n lignes, comme symbolisé sur la figure 4 où les indices absents sont mis entre parenthèses, dans un cas donné à titre d'exemple où n = 4 et m = 3. Dans le cas général, on aurait donc m unités de traitement et n étapes par phase.

Un second exemple est illustré à la figure 5 au moyen d'une autre matrice d'indices [ij] où chaque colonne comporte les indices ij des requêtes traitées par une même unité de traitement associée à un même module de sortie OMj.

De façon analogue au cas précédent, si m était supérieur à n, la matrice d'indices n'aurait que n colonnes pour m lignes, comme symbolisé sur la figure 5 où les indices absents sont mis entre parenthèses, dans le cas donné à titre d'exemple où n = 3 et m = 4. Dans le cas général, on aurait donc n unités de traitement et m étapes par phase.

Le choix des sous-ensembles de couples de modules d'entrée et de sortie pourrait toutefois suivre d'autres critères en tenant compte de la remarque suivante.

Les quantités admises GRij calculées par les unités de traitement sont normalement destinées aux modules d'entrée IMi qui étaient à l'origine des requêtes RQij correspondantes.

Aussi en vue de simplifier les interconnexions impliquant les unités de traitement, dans le cas où les requêtes RQij sont créées par les modules d'entrée, il peut être avantageux dans tous les cas que chaque unité de traitement PUi soit dédiée au traitement des quantités requises issues d'un même module d'entrée IMi associé. En effet, chaque unité de traitement PUi étant toujours associée à un même module d'entrée IMi, selon le schéma de la figure 4 par exemple, la transmission des requêtes de chaque module d'entrée vers l'unité de traitement associée et la transmission en retour des quantités admises peuvent se faire directement, sans nécessiter une interface d'aiguillage modifiable.

On peut noter que si m était supérieur à n, le système fonctionnerait comme dans le cas où on aurait m modules d'entrée et m modules de sortie, à la différence près que des étapes fictives relatives à m-n modules de sortie inexistants seraient exécutées, de façon à conserver la synchronisation des unités de traitement.

La figure 6 va permettre d'expliquer le fonctionnement séquentiel de l'unité d'arbitrage.

Ce fonctionnement implique le séquenceur SQ et l'ensemble des unités de traitement PUi selon un schéma qui va être décrit pour un cas particulier où chaque unité de traitement est associée à un module d'entrée correspondant. La figure 6 montre plus précisément comment l'unité de traitement PUi dédiée au traitement des quantités requises RQij relatives au seul module d'entrée associé IMi coopère avec le séquenceur SQ.

Par ailleurs, des fonctions d'arbitrage particulières ont été choisies à titre d'exemple.

La figure 6 regroupe sous forme d'organigramme les principales opérations A1 à A11 effectuées séquentiellement au cours des étapes et phases successives par l' unités de traitement PUi associée au module d'entrée IMi, ainsi que les échanges d'informations effectués avec le séquenceur SQ.

Pour faciliter les explications, il convient d'abord de rappeler ou définir les notations utilisées :

- CIi : capacité d'entrée maximale du module d'entrée IMi;
- CI : paramètre "capacité d'entrée" dont la valeur prise en compte en début de chaque étape est réactualisée en fin de chaque étape;
- COj : capacité de sortie maximale du module de sortie OMj;
- RQij : quantité requise correspondant à une requête émise par le module d'entrée IMi pour un transfert de paquets vers le module de sortie OMj;
- GRij : quantité admise en réponse à la quantité requise RQij ,
- rqij : valeur de quantité requise résiduelle relative au couple IMi-OMj réactualisée en fin de chaque étape;
- RQ : paramètre "quantité requise résiduelle" prenant en début de chaque étape la valeur de quantité requise résiduelle rqij réactualisée à l'étape précédente;
- p : nombre de phases d'arbitrage par cycle;
- x : indicateur (numéro d'ordre) d'une phase d'arbitrage;
- D : coefficient diviseur relatif à la fonction d'arbitrage pour la phase en cours d'exécution;
- dx : valeurs du coefficient diviseur pour les différentes phases x;
- N : nombre d'étapes par phase d'arbitrage;
- y : indicateur (numéro d'ordre) d'une étape dans une phase d'arbitrage;
- CO : paramètre "capacité de sortie" dont la valeur prise en compte en début de chaque étape est réactualisée en fin de chaque étape;
- COj(x,y) : valeur de capacité de sortie pour un module de sortie OMj donné à prendre en compte comme valeur du paramètre CO au début de l'étape y de la phase x, la valeur de CO réactualisée en fin de l'étape fournissant la valeur de capacité de sortie du même module de sortie pour l'étape suivante y+1 de la même phase x;
- dGR : quantité admise partielle calculée par une étape;
- grij : cumul des valeurs de quantité admise partielle relatives au couple IMi-OMj et calculées depuis le début d'un cycle;

Comme représenté schématiquement sur l'organigramme, un cycle d'arbitrage débute par des opérations d'initialisation se répétant à chaque cycle:

- en A1, la valeur CIi de capacité d'entrée maximale du module d'entrée associé IMi est attribuée à la capacité d'entrée CI,
- en A2 sont mis à 0 les cumuls grij des valeurs de quantité admise partielle relatives respectivement aux n couples IMi-OMj formés du module d'entrée IMi et des n modules de sortie OMj.
- en A3 sont chargées les quantités requises RQij correspondant aux requêtes relatives aux transferts de paquets du module entrée IMi vers respectivement les n modules de sortie OMj.

Si les requêtes sont élaborées par les modules d'entrée, les quantités requises RQij correspondantes peuvent être transférées directement entre chaque module d'entrée IMi et l'unité de traitement PUi associée par une liaison simple, sans aucune action d'aiguillage de la part du séquenceur SQ. Ce ne serait pas le cas si les requêtes étaient élaborées par les modules de sortie.

Le cycle d'arbitrage se poursuit par des opérations d'initialisation spécifiques du cycle. Pour cela, grâce à des moyens adaptés Mj (mémoire préchargée ou module programmé), le séquenceur est en mesure à chaque cycle d'identifier la suite des couples de modules d'entrée et de sortie IMi-OMj pour lesquels les requêtes correspondantes doivent être prises en compte par les étapes successives de chaque phase de ce cycle.

Comme dans notre exemple chaque unité de traitement, telle que PUi, ne traite que des quantités requises RQij relatives au seul module d'entrée associé, tel que IMi, la suite de couples sera entièrement identifiée pour chaque unité de traitement PUi par une suite de valeurs du seul indice j des modules de sortie OMj, cette suite étant spécifique pour chaque module d'entrée IMi et donc notée j(i,y), pour "y" compris entre 1 et N. Ainsi, pour chaque étape y, l'unité reçoit l'identifiant j(i,y) du module de sortie OMj concerné par l'étape à exécuter.

D'autre part, le séquenceur est en mesure à chaque cycle d'identifier grâce à des moyens adaptés Md (mémoire préchargée par exemple) la suite de p fonctions associées respectivement aux p phases successives du cycle. Selon l'exemple décrit ici, les p fonctions sont simplement identifiées par différentes valeurs dx d'un coefficient diviseur D, où "x" est un nombre entier compris entre 1 et p identifiant une phase correspondante du cycle.

Le séquenceur comporte aussi une mémoire MCO, mise à jour à chaque étape, et stockant des valeurs de capacités de sortie relatives aux différents modules de sortie OMj. La capacité de sortie CO à prendre en compte en début de l'étape y de la phase x pour un module de sortie OMj donné est notée COj(x,y). Ainsi, en début de cycle, sa capacité de sortie CO aura la valeur COj(1,1) qui coïncide avec sa capacité de sortie maximale COj.

Le cycle d'arbitrage se poursuit alors par les opérations d'initialisation suivantes :

- en A4, initialisation de la valeur de quantité requise résiduelle rqij avec la valeur de quantité requise RQij relative au module de sortie OMj correspondant au premier indice j, (i,1), de la suite j(i,y). La quantité requise RQij est donc la valeur de quantité requise résiduelle rqij qui sera prise en compte à la première étape de la première phase du cycle;
- en A5, initialisation du coefficient diviseur D avec la valeur de dx pour la première phase, c'est-à-dire d1;
- en A6, initialisation de l'indice j avec la valeur j(i,y) correspondant à la première étape (y = 1), c'est-à-dire avec l'indice j(i,1), et initialisation du paramètre "capacité de sortie" CO avec la valeur de capacité de sortie COj(x,y) correspondant à ce même indice j(i,1) et donc correspondant à la première étape (y = 1) de la première phase (x = 1) du cycle, c'est-à-dire avec la capacité de sortie maximale COj du module de sortie OMj correspondant à l'indice j(i,1);
- en A7, initialisation du paramètre "quantité requise résiduelle" RQ avec la valeur rqij de quantité requise résiduelle initialisée en A4, c'est-à-dire avec la valeur de quantité requise RQij.

La première étape s'exécute alors par les opération A8 à A10 :

- en A8, calcul d'une première valeur de quantité admise partielle dGR en appliquant aux valeurs des paramètres RQ, CI, CO la fonction associée à la première phase, c'est-à-dire la fonction dGR = Min [RQ, CI, CO]/D.
- en A9, calcul d'une valeur réactualisée du paramètre "capacité de sortie" CO en retranchant la valeur de quantité admise partielle dGR calculée en A8 à la valeur qu'avait ce paramètre CO au début de l'étape, et envoi de cette valeur réactualisée au séquenceur SQ pour mise à jour dans la mémoire MCO de la valeur de capacité de sortie relative au module de sortie OMj concerné par cette étape, et qui sera à prendre en compte pour le même module de sortie à l'étape suivante y+1 de la même phase x.

- en A10, calcul des valeurs réactualisées des paramètres CI et rqij en retranchant la valeur de quantité admise partielle dGR calculée en A8 à chacune des valeurs qu'avaient ces paramètres au début de l'étape, et calcul d'une valeur réactualisée du cumul grij en ajoutant la valeur de quantité admise partielle dGR à la valeur qu'avait ce cumul au début de l'étape.

La valeur réactualisé de CI devient la valeur de capacité d'entrée CI à prendre en compte à l'étape suivante. Les valeurs réactualisées de rqij et grij deviennent les valeurs de ces paramètres à prendre en compte dans le même cycle à l'étape suivante qui implique le même couple d'indices ij.

Les opérations A6 à A10 se répètent lors des étapes suivantes en utilisant les valeurs successives de l'indice j (i,x) et de la capacité de sortie COj (x,y) fournies par le séquenceur au début de chaque nouvelle étape.

Après l'exécution de N étapes, le processus pour la phase suivante recommence à partir de l'opération A5 en attribuant au coefficient diviseur D la valeur suivante dx (c'est-à-dire d2 pour la deuxième phase) fournie par le séquenceur.

Les mêmes opérations se répètent jusqu'à la dernière étape (pour y = N) de la dernière phase (pour x = p) du cycle. Le cycle se termine alors et l'unité de traitement PUi dispose en A11 pour chaque indice j de la quantité admise GRij qui est égale à la valeur prise à ce stade par le cumul grij des valeurs de quantité admise partielle calculées au cours du cycle pour ce même indice j.

Un cycle suivant s'exécute alors selon le même algorithme. Pour assurer une bonne équité parmi les modules d'entrée et/ou de sortie quels que soient les types de trafic à supporter, il est préférable que les sous-ensembles définis pour un cycle donné soient différents de ceux définis pour le cycle qui suit. Il convient en effet que les requêtes prises en compte en premier par des cycles successifs concernent des modules d'entrée et/ou de sortie différents, choisis de sorte que chaque module d'entrée et de sortie soit traité de la même façon, du moins en moyenne sur plusieurs cycles.

La description qui précède s'applique au cas particulier où chaque unité de traitement PUi est dédiée au traitement des quantités requises par un même module d'entrée IMi associé.

Pour la mise en oeuvre pratique il suffit de prévoir les dispositions suivantes :

- chaque unité de traitement possède et gère des registres locaux de stockage d'un indicateur de phase et des valeurs de la capacité d'entrée maximale de ce module d'entrée, ainsi que des quantités requises et quantités admises relatives aux n couples formés du module d'entrée associé et des n modules de sortie,
- ledit séquenceur (SQ) fournit à chaque unité de traitement, au début de chaque étape un couple de valeurs formé d'un identifiant d'un module de sortie et de sa capacité de sortie,
- chaque unité de traitement est prévue pour transmettre au séquenceur, au cours de chaque étape la valeur réactualisée de capacité de sortie, et pour déterminer la somme des valeurs de quantité admise partielle relatives à chaque couple formé du module d'entrée associé et de chaque module de sortie.

Un autre cas particulier non décrit en détail est celui où chaque unité de traitement est dédiée au traitement des quantités requises destinées à un même module de sortie associé. On prévoira alors les dispositions suivantes :

- chaque unité de traitement possède et gère des registres locaux de stockage d'un indicateur de phase et des valeurs de la capacité de sortie maximale" de ce module de sortie, ainsi que des quantités requises et quantités admises relatives aux m couples formés du module de sortie associé et des m modules d'entrée,
- le séquenceur fournit à chaque unité de traitement, au début de chaque étape un couple de valeurs formé d'un identifiant d'un module d'entrée et de sa capacité d'entrée,
- chaque unité de traitement est prévue pour transmettre au séquenceur, au cours de chaque étape la valeur réactualisée de capacité d'entrée, et pour déterminer la somme des valeurs de quantité admise partielle relatives à chaque couple formé du module de sortie associé et de chaque module d'entrée.

Dans les deux cas précédents, le séquenceur SQ a non seulement un rôle de synchronisation pour déclencher les débuts de cycles, mais aussi de distribution des informations nécessaires à l'exécution de chaque étape de chaque cycle, ainsi que de mémorisation centralisée des capacités d'entrée ou de sortie mises à jour à chaque étape.

Il existe cependant encore une autre possibilité de réalisation selon laquelle le séquenceur SQ n'intervient plus à chaque étape, mais seulement au début de chaque cycle.

Selon cette réalisation, les unités de traitement sont interconnectées selon un réseau en anneau permettant des échanges de données selon un sens prédéfini entre chaque unité et une unité voisine située en aval. Chaque unité est alors prévue :

- pour transmettre au cours de chaque étape à l'unité voisine située en aval un couple de valeurs formé d'un identifiant d'un module de sortie et de sa capacité de sortie réactualisée,
- pour recevoir au cours de chaque étape de l'unité voisine située en amont un couple de valeurs formé d'un identifiant d'un module de sortie et de sa capacité de sortie réactualisée au cours de l'étape précédente.

Selon une variante dérivée de la réalisation précédente en échangeant les rôles des entrées et des sorties, les unités de traitement sont également interconnectées selon un réseau en anneau permettant des échanges de données selon un sens prédéfini entre chaque unité et une unité voisine située en aval. Chaque unité est prévue :

- pour transmettre au cours de chaque étape à l'unité voisine située en aval un couple de valeurs formé d'un identifiant d'un module d'entrée et de sa capacité d'entrée réactualisée,
- pour recevoir au cours de chaque étape de l'unité voisine située en amont un couple de valeurs formé d'un identifiant d'un module d'entrée et de sa capacité d'entrée réactualisée au cours de l'étape précédente.

Ces deux dernières variantes présentent l'avantage, pour une technologie donnée, de réduire au maximum le temps d'exécution de la fonction d'arbitrage. En contrepartie, elles offrent moins de souplesse quant aux choix des sous-ensembles de couples de modules d'entrée et de sortie adoptés pour les cycles successifs.

Comme indiqué à titre d'exemple sur la figure 6 en A8, la fonction consiste à diviser la plus petite des valeurs des paramètres RQ, CI, CO par un coefficient diviseur D ayant une valeur associée à cette fonction :

$$dGR = Min\ [RQ,\ CI,\ CO]/D,\ où\ D = dx\ pour\ la\ phase\ x.$$

Les valeurs d1-dp du coefficient diviseur respectivement associées aux p phases successives sont décroissantes depuis une valeur initiale inférieure à 1 jusqu'à une valeur dp finale égale à 1.

Les valeurs d1-dp du coefficient diviseur peuvent être choisies de diverses façons. On peut par exemple rechercher par simulation des valeurs optimisées pour le type de trafic auquel le système de commutation est destiné.

En pratique, en dehors de cas très spécifiques, le choix de valeurs d1-dp qui conviennent peuvent résulter des considérations suivantes.

D'abord, il est intéressant que chaque valeur du coefficient soit une puissance de 2, car les divisions par de tels coefficients se traduisent en représentation binaire par de simples décalages de nombres binaires, ce qui implique une mise en oeuvre au moyen d'un registre à décalage beaucoup plus simple et rapide qu'un vrai diviseur.

D'autre part, l'ordre de grandeur de la valeur initiale d1 du coefficient peut être déterminé théoriquement en tenant le raisonnement suivant. Si on se place dans le cas où m=n et où le trafic est uniforme par rapport aux ports d'entrée et de sortie, et tel que la quantité requise par chaque module d'entrée est supérieure à sa capacité d'entrée maximale CIi, si les capacités d'entrée maximales ont toutes une même valeur, les quantités admises devrait aussi avoir toutes une même valeur et par conséquent égaler la capacité d'entrée maximale divisée par m, c'est-à-dire CIi/m.

Compte tenu de la formule utilisée, la première quantité admise partielle obtenue est dGR = CIi/d1. Par conséquent, la valeur initiale du coefficient diviseur est avantageusement supérieure ou égale au nombre m de modules d'entrée.

L'invention n'est pas limitée aux seuls modes de réalisation décrits ci-dessus.

**Revendications**

**1.** Système de commutation pour noeud de réseau de télécommunication, comprenant m modules d'entrée (IM1, IM2, IMi, IMm) et n modules de sortie (OM1, OM2, OMj, OMn) coopérant chacun avec une matrice de commutation (1) et avec un contrôleur central (2) commandant ladite matrice (1), ledit système étant apte à aiguiller sélectivement, via la matrice (1), des paquets de données reçus par lesdits modules d'entrée, en fonction de leurs destinations respectives, vers des modules de sortie destinataires respectifs, une quantité de paquets relative à un couple de modules d'entrée et de sortie (IMi, OMj) donné étant définie comme une quantité de données constitutives d'un ou plusieurs paquets reçus par ce module d'entrée et destiné au module de sortie de ce couple, une requête relative à un couple de modules d'entrée et de sortie donné étant représentative d'une quantité dite "requise" (RQij) définie comme une quantité de paquets en attente dans ce module d'entrée et candidats pour être transférés vers ce module de sortie,

ledit contrôleur central (2) comportant une unité d'arbitrage central (CSC) pour effectuer une fonction d'arbitrage exécutable par cycles d'arbitrage successifs, chaque cycle déterminant, en fonction desdites requêtes (RQij) relatives à tous les couples de modules d'entrée et de sortie, des quantités dites "admises" (GRij) respectives définies comme des quantités de paquets, au plus égales respectivement auxdites quantités requises, dans la limite de quantités maximales de données pouvant être transférées pendant une durée de transfert fixée entre chaque module d'entrée (IMi) et la matrice (1) d'une part, et entre la matrice (1) et chaque module de sortie (OMj) d'autre part, ces quantités maximales étant appelées respectivement "capacité d'entrée maximale" (CIi) et "capacité de sortie maximale" (COj),

**caractérisé en ce que** l'ensemble des couples de modules d'entrée et de sortie (IMi, OMj) pouvant être divisé en N sous-ensembles disjoints tels qu'aucun module d'entrée ni aucun module de sortie n'appartienne à plus d'un couple d'un même sous-ensemble, l'unité d'arbitrage central (CSC) est apte à déclencher à chaque cycle d'arbitrage p phases successives (x) associées respectivement à p fonctions, et comporte une pluralité d'unités de traitement (PUi) aptes chacune à exécuter lesdites p fonctions, chaque fonction portant sur au moins trois paramètres appelés "quantité requise résiduelle" (RQ), "capacité d'entrée" (CI) et "capacité de sortie" (CO) dont les valeurs sont relatives à un même couple et sont initialisées en début de cycle respectivement par une quantité requise (RQij) correspondant à une requête, et lesdites capacités d'entrée et de sortie maximales (CIi, COj) relatives à ce couple,

**en ce que** chaque phase est formée de N étapes (y) successives associées respectivement auxdits sous-ensembles, chaque étape étant exécutée en parallèle par lesdites unités de traitement (PUi) pour effectuer pour chaque couple du sous-ensemble associé l'opération suivante :

- calcul d'une valeur de quantité admise dite "partielle" (dGR) en appliquant aux valeurs desdits paramètres la fonction associée à la phase (x) qui comporte cette étape,
- calcul de valeurs réactualisées desdits paramètres en retranchant cette valeur de quantité admise partielle (dGR) à chacune des valeurs qu'avaient lesdits paramètres au début de l'étape, lesdites valeurs réactualisées servant de valeurs des paramètres pour l'étape suivante,

la somme (grij) des valeurs de quantité admise partielle relatives à un même couple et calculées au cours d'un cycle complet constituant la quantité admise (GRij) relative à ce couple,

et **en ce que** lesdites p fonctions sont telles que pour des valeurs positives données desdits trois paramètres, la valeur résultante de quantité admise partielle pour une phase donnée est supérieure à la valeur résultante obtenue pour une phase précédente.

2. Système de commutation selon la revendication 1, **caractérisé en ce que** lesdits sous-ensembles définis pour un cycle donné sont différents de ceux définis pour le cycle qui suit.

3. Système de commutation selon l'une des revendications 1 ou 2, **caractérisé en ce que** chaque fonction consiste à diviser la plus petite desdites valeurs desdits paramètres (RQ, CI, CO) respectivement de quantité requise, de capacité d'entrée et de capacité de sortie par un coefficient diviseur (dx) ayant une valeur associée à cette fonction, lesdites valeurs de coefficient diviseur (d1-dp) respectivement associées aux p phases successives étant décroissantes depuis une valeur initiale jusqu'à une valeur finale (dp) égale à 1.

4. Système de commutation selon la revendication 3, **caractérisé en ce que** chaque valeur (d1-dp) dudit coefficient diviseur (dx) est une puissance de 2.

5. Système de commutation selon l'une des revendications 3 ou 4, **caractérisé en ce que** ladite valeur initiale du coefficient diviseur est supérieure ou égale au nombre m de modules d'entrée.

6. Système de commutation selon l'une des revendications 1 à 5, **caractérisé en ce que** lesdits sous-ensembles sont composés chacun d'un même nombre M de couples de modules d'entrée et de sortie (IMi, OMj) et **en ce que** l'unité d'arbitrage central (CSC) comprend M unités de traitement (PUi) coopérant avec un séquenceur (SQ) commun.

7. Système de commutation selon la revendication 6, **caractérisé en ce que** chaque unité de traitement (PUi) est dédiée au traitement :

- soit des quantités requises par un même module d'entrée (IMi) associé et destinées auxdits n modules de sortie,
- soit des quantités requises par lesdits m modules d'entrée et destinées à un même module de sortie (OMj) associé.

8. Système de commutation selon la revendication 7, **caractérisé en ce que** dans le cas où m et n ne sont pas égaux, N est égal au plus grand des deux nombres m et n, et M est égal au plus petit des deux nombres m et n, chaque unité de traitement (PUi) étant dédiée au traitement des quantités requises qui impliquent soit un module d'entrée (IMi) associé, soit un module de sortie (OMj) associé selon que m est respectivement inférieur ou supérieur à n.

9. Système de commutation selon l'une des revendications 7 ou 8, **caractérisé en ce que** dans le cas où chaque unité de traitement (PUi) est dédiée au traitement des quantités requises par un même module d'entrée (IMi) associé :

   - chaque unité de traitement (PUi) possède et gère des registres locaux de stockage d'un indicateur de phase (x) et des valeurs de ladite capacité d'entrée maximale (CIi) de ce module d'entrée (IMi), ainsi que desdites quantités requises (RQij) et quantités admises (GRij) relatives aux n couples formés dudit module d'entrée (IMi) associé et desdits n modules de sortie (OMj),
   - ledit séquenceur (SQ) fournit à chaque unité de traitement (PUi), au début de chaque étape (y) un couple de valeurs formé d'un identifiant (j(i,y)) d'un module de sortie (OMj) et de sa capacité de sortie (COj(x,y)),
   - chaque unité de traitement (PUi) est prévue pour transmettre au séquenceur (SQ), au cours de chaque étape la valeur réactualisée de capacité de sortie (COj), et pour déterminer la somme des valeurs de quantité admise partielle (grij) relatives à chaque couple formé dudit module d'entrée (IMi) associé et de chaque module de sortie (OMj).

10. Système de commutation selon l'une des revendications 7 ou 8, **caractérisé en ce que** dans le cas où chaque unité de traitement (PUi) est dédiée au traitement des quantités requises destinées à un même module de sortie (OMj) associé :

   - chaque unité de traitement (PUi) possède et gère des registres locaux de stockage d'un indicateur de phase (x) et des valeurs de ladite capacité de sortie maximale" (COj) de ce module de sortie (OMj), ainsi que desdites quantités requises (RQij) et quantités admises (GRij) relatives aux m couples formés dudit module de sortie (OMj) associé et desdits m modules d'entrée (IMi),
   - ledit séquenceur (SQ) fournit à chaque unité de traitement (PUi), au début de chaque étape (y) un couple de valeurs formé d'un identifiant d'un module d'entrée (IMi) et de sa capacité d'entrée (CI),
   - chaque unité de traitement (PUi) est prévue pour transmettre au séquenceur (SQ), au cours de chaque étape la valeur réactualisée de capacité d'entrée (CI), et pour déterminer la somme des valeurs de quantité admise partielle (grij) relatives à chaque couple formé dudit module de sortie (OMj) associé et de chaque module d'entrée (IMi).

11. Système de commutation selon l'une des revendications 7 ou 8, **caractérisé en ce que** lesdites unités de traitement (PUi) sont interconnectées selon un réseau en anneau permettant des échanges de données selon un sens prédéfini entre chaque unité et une unité voisine située en aval, et **en ce que** chaque unité est prévue :

   - pour transmettre au cours de chaque étape à ladite unité voisine située en aval un couple de valeurs formé d'un identifiant (j(i,y)) d'un module de sortie (OMj) et de sa capacité de sortie (COj(x,y)) réactualisée,
   - pour recevoir au cours de chaque étape de l'unité voisine située en amont un couple de valeurs formé d'un identifiant (j(i,y)) d'un module de sortie (OMj) et de sa capacité de sortie (COj(x,y)) réactualisée au cours de l'étape précédente.

12. Système de commutation selon l'une des revendications 7 ou 8, **caractérisé en ce que** lesdites unités de traitement (PUi) sont interconnectées selon un réseau en anneau permettant des échanges de données selon un sens prédéfini entre chaque unité et une unité voisine située en aval, et **en ce que** chaque unité est prévue :

   - pour transmettre au cours de chaque étape à ladite unité voisine située en aval un couple de valeurs formé d'un identifiant d'un module d'entrée (IMi) et de sa capacité d'entrée réactualisée,
   - pour recevoir au cours de chaque étape de l'unité voisine située en amont un couple de valeurs formé d'un identifiant d'un module d'entrée (IMi) et de sa capacité d'entrée réactualisée au cours de l'étape précédente.

**Claims**

1. A switching system for a telecommunication network node, comprising m input modules (IM1, IM2, IMi, IMm) and n output modules (OM1, OM2, OMj, OMn), each co-operating with a switching matrix and with a central controller (2) controlling said matrix (1), said system being capable of selectively switching, via the matrix (1), data packets received by said input modules, depending on their respective destinations, to the respective destination output modules,

a quantity of packets related to a given pair of input and output modules (IMi, OMj), being defined as a quantity of data constituting one or more packet(s) received by this input module and intended for the output module of this pair,

a request relating to a given pair of input and output modules, being representative of a quantity termed "required" (RQij), defined as a quantity of packets queuing in this input module and candidates to be transferred to this output module,

said central controller (2) incorporating a central arbitration unit (CSC) in order to implement an arbitration function that may be run in successive arbitration cycles, each cycle determining, according to said requests (RQij) related to all input module and output module pairs, the respective quantities termed "accepted" (GRij) defined as quantities of packets, at most equal to said required quantities respectively, restricted to the maximum quantities of data capable of being transferred during a fixed transfer period between each input module (IMi) and the matrix (1) on one hand, and between the matrix (1) and each output module (OMj) on the other, these maximum quantities being called "maximum input capacity" (Cli) and "maximum output capacity" (COj) respectively,

**characterized in that** all the input module and output module pairs (IMi, OMj) capable of being divided into N separate subsets such that neither an input module nor an output module belongs to more than one pair of a single subset, the central arbitration unit (CSC) is capable of activating for each arbitration cycle p successive phases (x) associated respectively with p functions, and incorporates a plurality of processing units (PUi) each capable of running said p functions, each function applying to at least three parameters called "residual required quantity" (RQ), "input capacity" (CI) and "output capacity" (CO) in which the values are related to a single pair and are set respectively at the start of the cycle by a required quantity (Rqij) corresponding to a request, and said maximum input and output capacities (Cli, COj) related to this pair,

**in that** each phase consists of N successive steps (y) associated respectively with said subsets, each step being run in parallel by said processing units (PUi) in order to implement for each pair of the associated subset the following operation:

- calculating a so-called "partial" accepted quantity value (dGR) by applying to the values of said parameters the function associated with the phase (x) which includes this step,
- calculating revised values of said parameters by subtracting this partial accepted quantity value (dGR) from each of the values which said parameters had at the start of the step, said revised values acting as parameter values for the next step,

the sum (grij) of the partial accepted quantity values related to a single pair and calculated during a complete cycle constituting the accepted quantity (Grij) related to this pair,

and **in that** said p functions are such that for the given positive values of said three parameters, the resultant partial accepted quantity value for a given phase is > the resultant value obtained for a preceding phase.

2. A switching system in accordance with claim 1, **characterized in that** said subsets defined for a given cycle are different from those defined for the cycle which follows.

3. A switching system in accordance with either one of claims 1 and 2, **characterized in that** each function consists of dividing the smallest of said values of said parameters (RQ, CI, CO) of the required quantity, input capacity and output capacity respectively by a divisor (dx) having a value associated with this function, said values of the divisor (d1-dp) associated respectively with p successive phases being decremented from an initial value until they reach a final value (dp) equal to 1.

4. A switching system in accordance with claim 3, **characterized in that** each value (d1-dp) of said divisor (dx) is a power of 2.

5. A switching system in accordance with either one of claims 3 or 4, **characterized in that** the said initial value of the divisor is ≥ the number m of input modules.

6. A switching system in accordance with any one of claims 1 to 5, **characterized in that** said subsets each consist of a single number M of pairs of input and output modules (IMi, OMj) and **in that** the central arbitration unit (CSC) comprises M processing units (PUi) cooperating with a common sequencer (SQ).

7. A switching system in accordance with claim 6, **characterized in that** each processing unit (PUi) is dedicated to processing:

- either the quantities required by a single input module (Imi) associated with and intended for said n output modules,
- or the quantities required by said m input modules and intended for a single associated output module (OMj).

8. A switching system in accordance with claim 7, **characterized in that** if m and n are not equal, N is equal to the greater of the two numbers m and n, and M is equal to the smaller of the two numbers m and n, each processing unit (PUi) being dedicated to the processing of the required quantities, which involve either an associated input module (Imi), or an associated output module (OMj), depending on whether m is < or > n respectively.

9. A switching system in accordance with either one of claims 7 or 8, **characterized in that** if each processing unit (PUi) is dedicated to processing the required quantities via a single associated input module (IMi):

- each processing unit (PUi) has and manages local registers storing a phase indicator (x) and values of said maximum input capacity (CIi) for this input module (IMi), as well as the required quantities (RQij)and accepted quantities (GRij) related to the n pairs formed by the associated input module (IMi)and the n output modules (OMj),
- said sequencer (SQ) supplies to each processing unit (PUi), at the start of each step (y), a pair of values formed by an identifier (j(i,y)) of an output module (OMj) and of its output capacity (COj(x,y)),
- each processing unit (PUi) is intended to transmit to the sequencer (SQ), during each step, the revised value of the output capacity (COj), and to determine the sum of the partial accepted quantity values (grij) related to each pair formed by the associated input module (IMi) and each output module (OMj).

10. A switching system in accordance with either one of claims 7 or 8, **characterized in that** if each processing unit (PUi) is dedicated to processing the required quantities intended for a single associated output module (OMj):

- each processing unit (PUi) has and manages local registers storing a phase indicator (x) and values of said maximum output capacity (COj) for this output module, as well as the required quantities (RQij) and accepted quantities (GRij) related to the m pairs formed by the associated output module (OMj) and the m input modules (IMi),
- said sequencer (SQ) supplies to each processing unit (PUi), at the start of each step (y), a pair of values formed by an identifier of an input module (IMi) and of its input capacity (CI),
- each processing unit (PUi) is intended to transmit to the sequencer (SQ), during each step, the revised value of the input capacity (CI), and to determine the sum of the partial accepted quantity values (grij) related to each pair formed by the associated output module (OMj) and each input module (IMi).

11. A switching system in accordance with either one of claims 7 or 8, **characterized in that** said processing units (PUi) are interconnected along a ring network allowing data exchanges in a predefined direction between each unit and an adjoining unit situated downstream, and **in that** each unit is intended:

- to transmit to said adjoining unit situated downstream, during each step, a pair of values formed by an identifier (j(i,y)) of an output module (OMj) and of its revised output capacity (COj(x,y)),
- to receive from said adjoining unit situated upstream, during each step, a pair of values formed by an identifier (j(i,y)) of an output module (OMj) and of its output capacity (COj(x,y)), revised during the preceding step.

12. A switching system in accordance with either one of claims 7 or 8, **characterized in that** said processing units (PUi) are interconnected along a ring network allowing data exchanges in a predefined direction between each unit and an adjoining unit situated downstream, and **in that** each unit is intended:

- to transmit to said adjoining unit situated downstream, during each step, a pair of values formed by an identifier of an input module (IMi) and of its revised input capacity,
- to receive from said adjoining unit situated upstream, during each step, a pair of values formed by an identifier of an input module (IMi) and of its input capacity, revised during the preceding step.

**Patentansprüche**

1. Vermittlungssystem für einen Telekommunikationsknoten, welches m Eingangsmodule (IM1, IM2, IMi, IMm) und n Ausgangsmodule (OM1, OM2, OMj, OMn) umfasst, wobei jedes Modul mit einer Vermittlungsmatrix (1) und einer zentralen Steuervorrichtung (2), welcher die besagte Matrix (1) steuert arbeitet,

wobei das besagte System fähig ist, über die Matrix (1) selektiv von den besagten Eingangsmodulen empfangene Datenpakete entsprechend deren jeweiligen Zieladressen an die entsprechenden Empfangsausgansmodule zu lenken,

wobei eine Menge von Paketen, welche einem gegebenen Eingangs- und Ausgangsmodulpaar (IMi, OMj) entspricht als eine Datenmenge, definiert ist, welche ein oder mehrere von diesem Eingangsmodul erhaltene und für das Ausgangsmodul dieses Paars bestimmte Pakete bildet,

wobei eine ein gegebenes Eingangs- und Ausgangsmodulpaar betreffende Anfrage repräsentativ für eine sogenannte "geforderte" Menge (RQij) ist, definiert als eine Menge von Paketen, welche sich in diesem Eingangsmodul in der Warteschlange befinden und Kandidaten zur Übertragung an dieses Ausgangsmodul sind,

wobei die besagte zentrale Steuervorrichtung (2) eine zentrale Verteilereinheit (CSC) umfasst, um eine Verteilerfunktion auszuführen, welche in aufeinanderfolgenden Verteilungszyklen erfolgt, wobei jeder Zyklus, entsprechend den besagten, alle Eingangs- und Ausgangsmodulpaare betreffenden Anfragen (RQij), die entsprechenden sogenannten "zugelassenen" Mengen (GRij) bestimmt, welche als höchstens jeweils mit den besagten geforderten Mengen gleichwertige Paketmengen definiert werden, begrenzt auf die maximalen Datenmengen, welche während einer festgelegten Übertragungsdauer zwischen jedem Eingangsmodul (IMi) und der Matrix (1) einerseits und zwischen der Matrix (1) und jedem Ausgangsmodul (OMj) andererseits übertragen werden können, wobei diese maximalen Mengen jeweils "maximale Eingangskapazität" (CIi) und "maximale Ausgangskapazität" (COj) genannt werden,

**dadurch gekennzeichnet, dass** alle Eingangs- und Ausgangspaare (IMi, OMj), welche in N getrennte Untereinheiten geteilt werden können, so dass weder ein Eingangsmodul noch ein Ausgangsmodul mehr als einem Paar einer selben Untereinheit angehört, und dass die zentrale Verteilereinheit (CSC) fähig ist, bei jedem Verteilungszyklus p aufeinanderfolgende Phasen (x), welche jeweils p Funktion zugeordnet sind, zu aktivieren, und eine Mehrzahl von Prozessoreinheiten (PUi) umfasst, von denen eine jede fähig ist, die besagten p Funktionen auszuführen,

wobei jede Funktion mindestens drei Parameter, die sogenannten "geforderte Restmenge" (RQ), "Eingangskapazität" (CI) und "Ausgangskapazität" (CO), deren Werte ein selbes Paar betreffen und jeweils zu Beginn eines Zyklus durch eine geforderte Menge (Rqij), welche einer Anfrage entspricht, und die besagten dieses Paar betreffenden maximalen Eingangs- und Ausgangskapazitäten (CIi, COj), initialisiert werden,

dass jede Phase aus N aufeinanderfolgenden, jeweils den besagten Untereinheiten zugeordneten Schritten (y) besteht , wobei jeder Schritt parallel von den besagten Prozessoreinheiten (PUi) ausgeführt wird, um für jedes Paar der zugeordneten Untereinheit folgende Vorgänge zu implementieren:

- Berechnung eines zugelassenen sogenannten "Teil"-Mengenwertes (dGR) unter Anwenden der der Phase "x", welche diesen Schritt umfasst, zugeordneten Funktion auf die Werte der besagten Parameter,
- Berechnung der aktualisierten Werte der besagten Parameter unter Subtrahieren dieses zugelassenen Teilmengenwertes (dGR) von einem jeden dieser Werte, welche die besagten Parameter zu Beginn des Schrittes hatten, wobei die besagten aktualisierten Parameterwerte für den nächsten Schritt bereitgestellt werden,

die Summe (grij) der zugelassenen Teilmengenwerte, welche ein selbes Paar betreffen und während eines kompletten Zyklus berechnet wurden, die dieses Paar betreffende zugelassene Menge (GRij) darstellt,

und dass die besagten p Funktionen so gestaltet sind, dass für die gegebenen positiven Werte der besagten drei Parameter der sich ergebende zugelassene Teilmengenwert für eine gegebene Phase höher ist als der sich für eine vorhergehende Phase erzielte ergebende Wert.

2. Vermittlungsvorrichtung nach Anspruch 1, **dadurch gekennzeichnet, dass** die besagten für einen gegebenen Zyklus definierten Untereinheiten sich von den für den darauf folgenden Zyklus definierten Untereinheiten unterscheiden.

3. Vermittlungsvorrichtung nach einem beliebigen der Ansprüche 1 oder 2,
**dadurch gekennzeichnet, dass** jede Funktion darin besteht, den kleinsten der besagten Werte der besagten jeweiligen Parameter (RQ, CI, CO) "geforderte Menge", "Eingangskapazität" und "Ausgangskapazität" jeweils durch einen Divisionsfaktor (dx), welcher einen dieser Funktion zugeordneten Wert hat, zu teilen, wobei die besagten Werte des Divisionsfaktors (d1-dp), welche den p aufeinanderfolgenden Phasen zugeordnet sind, von einem ursprünglichen Wert aus absteigen, bis sie einen Endwert (dp) gleich 1 erreichen.

4. Vermittlungsvorrichtung nach Anspruch 3, **dadurch gekennzeichnet, dass** jeder Wert (d1-dp) des besagten Divisionsfaktors (dx) eine zweite Potenz ist.

**5.** Vermittlungsvorrichtung nach einem beliebigen der Ansprüche 3 oder 4, **dadurch gekennzeichnet, dass** der besagte ursprüngliche Wert des Divisionsfaktors gleich der oder höher als die Anzahl m der Eingangsmodule ist.

**6.** Vermittlungsvorrichtung nach einem beliebigen der Ansprüche 1 bis 5, **dadurch gekennzeichnet, dass** eine jede der besagten Untereinheiten aus einer selben Anzahl M von Eingangs- und Ausgangsmodulpaaren (IMi, OMj) besteht, und dass die zentrale Verteilereinheit (CSC) M Prozessoreinheiten (PUi) umfasst, welche mit einem gemeinsamen Sequenzer (SQ) arbeiten.

**7.** Vermittlungsvorrichtung nach Anspruch 6, **dadurch gekennzeichnet, dass** jede Prozessoreinheit (PUi) dafür bestimmt ist:

- entweder die von einem selben zugeordneten Eingangsmodul (IMi) geforderten Mengen, welche für die besagten n Ausgangsmodule bestimmt sind, zu verarbeiten,
- oder die von den besagten m Eingangsmodulen geforderten Mengen, welche für ein selbes zugeordnetes Ausgangsmodul (OMj) zu verarbeiten.

**8.** Vermittlungsvorrichtung nach Anspruch 7, **dadurch gekennzeichnet, dass**, wenn m und n nicht gleichwertig sind, N gleich der größten der beiden Zahlen m und n ist, und M gleich der kleineren der beiden Zahlen m und n ist, wobei jede Prozessoreinheit (PUi) der Verarbeitung der geforderten Mengen zugeordnet ist, welche entweder ein zugeordnetes Eingangsmodul (IMi) oder ein zugeordnetes Ausgangsmodul (OMj) einbeziehen, abhängig davon, ob m jeweils niedriger oder höher als n ist.

**9.** Vermittlungsvorrichtung nach einem beliebigen der Ansprüche 7 oder 8, **dadurch gekennzeichnet, dass**, wenn jede Prozessoreinheit (PUi) dafür bestimmt ist, die für ein selbes zugeordnetes Eingangsmodul (IMi) geforderten Mengen zu verarbeiten:

- jede Prozessoreinheit (PUi) lokale Register hat und verwaltet, welche einen Phasenanzeiger (x) und Werte der besagten maximalen Eingangskapazität (CIi) dieses Eingangsmoduls (IMi) speichern, sowie die geforderten Mengen (RQij) und die zugelassenen Mengen (GRij), welche die n Paare betreffen, die von dem zugeordneten Eingangsmodul (IMi) und den n Ausgangsmodulen (OMj) gebildet werden,
- der besagte Sequenzer (SQ) für jede Prozessoreinheit (PUi) am Anfang jedes Schrittes (y) ein von einer Kennung (j(i,y) eines Ausgangsmoduls (OMj) und von dessen Ausgangskapazität (COj(x,y) gebildetes Wertepaar bereitstellt,
- jede Prozessoreinheit (PUi) für die Übertragung, während jedes Schrittes, des aktualisierten Wertes der Ausgangskapazität (COj) an den Sequenzer (SQ) und für die Bestimmung der Summe der zugelassenen Teilmengenwerte (grij), welche jedes von dem besagten zugeordneten Eingangsmodul (IMi) und von jedem Ausgangsmodul (OMj) gebildete Paar betrifft, ausgestattet ist.

**10.** Vermittlungsvorrichtung nach einem beliebigen der Ansprüche 7 oder 8, **dadurch gekennzeichnet, dass**, wenn jede Prozessoreinheit (PUi) dafür bestimmt ist, die für ein selbes zugeordnetes Ausgangsmodul (OMi) geforderten Mengen zu verarbeiten:

- jede Prozessoreinheit (PUi) lokale Register hat und verwaltet, welche einen Phasenanzeiger (x) und Werte der besagten maximalen Ausgangskapazität (COi) dieses Ausgangsmodul speichern, sowie die geforderten Mengen (RQij) und die zugelassenen Mangen (GRij), welche die die m Paare betreffen, die von dem zugeordneten (OMj) und den m Eingangsmodulen (IMi) gebildet werden,
- der besagte Sequenzer (SQ) für jede Prozessoreinheit (PUi) am Anfang jedes Schrittes (y) ein von einer Kennung eines Eingangsmoduls (IMi) und von dessen Eingangskapazität (CI) gebildetes Wertepaar bereitstellt,
- jede Prozessoreinheit (PUi) für die Übertragung, während jedes Schrittes, des aktualisierten Wertes der Eingangskapazität (CI) an den Sequenzer (SQ) und für die Bestimmung der Summe der zugelassenen Teilmengenwerte (grij), welche jedes von dem besagten zugeordneten Ausgangsmodul (OMj) und von jedem Eingangsmodul (IMi) gebildete Paar betrifft, ausgestattet ist.

**11.** Vermittlungsvorrichtung nach einem beliebigen der Ansprüche 7 oder 8, **dadurch gekennzeichnet, dass** die besagten Prozessoreinheiten (PUi) entsprechend einem Ringnetz miteinander verbunden sind, wodurch Datenaustausche zwischen jeder Einheit und einer benachbarten nachgeschalteten Einheit in einer vorherbestimmten Richtung ermöglicht werden, und **dadurch**, dass jede Einheit dafür vorgesehen ist:

- während jedes Schrittes ein von einer Kennung (j(i,y)) eines Ausgangsmoduls (OMj) und von dessen aktualisierter Ausgangskapazität (COj(x,y)) gebildetes Wertepaar an die besagte benachbarte, nachgeschaltete Einheit zu übertragen,
- während jedes Schrittes ein von einer Kennung (j (i,y)) eines Ausgangsmoduls (OMj) und von dessen während des vorhergegangenen Schrittes aktualisierter Ausgangskapazität (COj(x,y)) gebildetes Wertepaar von der benachbarten, vorgeschalteten Einheit zu empfangen.

12. Vermittlungsvorrichtung nach einem beliebigen der Ansprüche 7 oder 8,
**dadurch gekennzeichnet, dass** die besagten Prozessoreinheiten (PUi) entsprechend einem Ringnetz miteinander verbunden sind, wodurch Datenaustausche zwischen jeder Einheit und einer benachbarten nachgeschalteten Einheit in einer vorherbestimmten Richtung ermöglicht werden, und **dadurch**, dass jede Einheit dafür vorgesehen ist:

- während jedes Schrittes ein von einer Kennung eines Eingangsmoduls (IMi) und von dessen aktualisierter Eingangskapazität gebildetes Wertepaar an die besagte benachbarte, nachgeschaltete Einheit zu übertragen,
- während jedes Schrittes ein von einer Kennung eines Eingangsmodules (IMi) und von dessen während des vorhergegangenen Schrittes aktualisierter Eingangskapazität gebildetes Wertepaar von der benachbarten, vorgeschalteten Einheit zu empfangen.

## FIG_1

## FIG_2

$$\begin{array}{c c c c} & 1 \quad ------- & j \quad ------- & n \\ 1 & \begin{bmatrix} RQ_{11} & RQ_{12} & RQ_{13} & RQ_{14} \\ RQ_{21} & RQ_{22} & RQ_{23} & RQ_{24} \\ RQ_{31} & RQ_{32} & RQ_{33} & RQ_{34} \\ RQ_{41} & RQ_{42} & RQ_{43} & RQ_{44} \end{bmatrix} \end{array} \quad [RQij]$$

## FIG_3

## FIG_4

$m \leqslant n$

$M = m$ $N = n$

$$\begin{array}{c} y=1 \rightarrow \\ y=2 \rightarrow \\ y=3 \rightarrow \\ y=4 \rightarrow \end{array} \begin{bmatrix} 11 & 22 & 33 & (44) \\ 12 & 23 & 34 & (41) \\ 13 & 24 & 31 & (42) \\ 14 & 21 & 32 & (43) \end{bmatrix}$$

$\quad\quad$ PU1 PU2 $\quad$ PU3 (PU4)

$[i \; j]$

## FIG_5

$m \geqslant n$

$M = n$ $N = m$

$$\begin{array}{c} y=1 \rightarrow \\ y=2 \rightarrow \\ y=3 \rightarrow \\ y=4 \rightarrow \end{array} \begin{bmatrix} 11 & 22 & 33 & (44) \\ 21 & 32 & 43 & (14) \\ 31 & 42 & 13 & (24) \\ 41 & 12 & 23 & (34) \end{bmatrix}$$

$\quad\quad$ PU1 PU2 $\quad$ PU3 (PU4)

$[i \; j]$

# FIG_6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1549103 A
- US 20050135350 A
- US 2001043606 A